# EUROPÄISCHE PATENTSCHRIFT

(11) **EP 0 972 685 B1**
(45) Veröffentlichungstag und Bekanntmachung des Hinweises auf die Patenterteilung: **18.12.2002**
(21) Anmeldenummer: 99113529.4
(22) Anmeldetag: 06.07.1999
(51) Int. Cl.: B60R 22/46

(54) **Linearantrieb für einen Gurtstraffer**
Linear drive for a belt tensioner
Entraînement linéaire pour un tendeur de ceinture de sécurité

(30) Priorität: 17.07.1998 DE 29812801 U
(43) Veröffentlichungstag der Anmeldung: 19.01.2000
(73) Patentinhaber: TRW Occupant Restraint Systems GmbH & Co. KG, 73551 Alfdorf (DE)
(72) Erfinder: Hudelmaier, Karl, 73553 Alfdorf (DE); Mödinger, Thomas, 73553 Alfdorf (DE); Schmid, Johannes, 73527 Schwäbisch Gmünd (DE)
(74) Vertreter: Degwert, Hartmut, Dipl.-Phys.

(56) Entgegenhaltungen:
- DE-A- 2 249 786
- DE-A- 3 629 300
- DE-C- 685 773
- DE-U- 29 520 307
- US-A- 3 942 819

## Beschreibung

Die Erfindung betrifft einen Linearantrieb für einen Gurtstraffer, mit einem Zylinderrohr, das an einem axialen Ende eine mit einer Öffnung versehene Stirnwand aufweist, einem in diesem verschiebbar angeordneten Kolben, der einen hohlen Innenraum aufweist, und einer pyrotechnischen Treibladung, die nach ihrer Zündung den Innenraum des Kolbens mit unter Druck stehendem Gas beaufschlagt.

Ein solcher Linearantrieb ist aus der DE-OS-44 15 103 bekannt. Im Bedarfsfall wird die Treibladung gezündet, so daß der Kolben unter der Wirkung des erzeugten Gases einen Straffhub ausführt, der von dem Gurtstraffer in eine Drehung einer Gurtspule eines Gurtaufrollers in der Aufwickelrichtung umgesetzt wird. Dadurch wird die sogenannte Gurtlose aus dem Gurtsystem herausgezogen, damit der Fahrzeuginsasse bei einem Unfall möglichst früh an der Fahrzeugverzögerung teilnimmt.

Ein Problem bei einem solchen Linearantrieb besteht darin zu gewährleisten, daß auch bei einer Zündung der Treibladung unter ungünstigsten Umständen, z.B. bei Mißbrauch, Überhitzung durch Fahrzeugbrand oder blockierter Achse des angeschlossenen Gurtaufrollers, keinerlei Gefährdung von der Treibladung und den Teilen des Linearantriebs ausgeht. Aus dem DE-GM 295 20 307, das ebenfalls den Oberbegriff des Anspruchs 1 zeigt, ist es bekannt, die Stirnwand des Kolbens mit einer Durchgangsöffnung zu versehen, die auf der Seite des Innenraumes des Kolbens durch eine Berstscheibe abgedeckt ist. Die Berstscheibe gibt bei einem übermäßig hohen Druck im Innenraum des Kolbens die Durchgangsöffnung frei, so daß dieser Druck aus dem Innenraum des Kolbens entweichen kann und ein Bersten des Zylinderrohres verhindert ist, ohne daß dieses besonders kräftig ausgelegt sein muß. Durch die Dimensionierung der Berstscheibe kann dabei der maximal im Innenraum des Kolbens auftretende Druck eingestellt und an die jeweiligen Verhältnisse angepaßt werden. Die Berstscheibe ist ferner mit einer kalibrierten Ausströmöffnung versehen, die der Durchgangsöffnung gegenüberliegt. Diese Ausgestaltung bietet neben einer Begrenzung des im Innenraum des Kolbens maximal auftretenden Drucks auch Vorteile hinsichtlich des Verhaltens des Linearantriebes nach einer erfolgten Gurtstraffung, wenn die Gurtspule mit einem Energieaufnahmemittel wie einem Torsionsstab verbunden ist, welches Lastspitzen im Gurtsystem aufnimmt.

Problematisch bleibt aber der nach Zünden der Treibladung aus der Öffnung in der Berstscheibe austretende heiße Gasstrom, der mit einer Flamme einhergehen kann. Wenn die Berstscheibe aufgrund eines unzulässig hohen Drucks aufgebrochen wird, können Bruchstücke aus dem Zylinderrohr herausgeschleudert werden. Durch die vorliegende Erfindung werden auch diese Probleme behoben.

Gemäß der Erfindung ist innenseitig von der Stirnwand des Zylinderrohres ein Kissen aus einem Drahtgemenge angeordnet. Das Kissen hat eine Mehrfachfunktion. Zum einen bedämpft es den Aufprall des Kolbens am axialen Ende des Zylinderrohres. Zum anderen absorbiert es Bruchstücke der Berstscheibe, kühlt die heißen Gase und verhindert das Austreten einer Flamme.

Bei der bevorzugten Ausführungsform besteht das Kissen aus einer schlauchförmigen Hülle und einer Füllung. Die Füllung kann ihrerseits durch eine aufgerollte Schlauchstruktur gebildet sein oder aus Stahlwolle bestehen. Die axialen Enden der Hülle sind verschlossen, insbesondere durch Verdrehen, so daß das Kissen insgesamt eine definierte zylindrische Form hat und unter radialer Stauchung in das Zylinderrohr eingeschoben werden kann. Das Kissen hat eine beträchtliche axiale Länge von vorzugsweise etwa 40 mm und wird beim Auftreffen des Kolbens zusammengeschoben bis auf eine axiale Länge von der Größenordnung eines Millimeters. Der Hub des Kolbens wird folglich durch das Kissen nicht oder nur unwesentlich vermindert.

Die Erfindung wird nachfolgend unter Bezugnahme auf bevorzugte Ausführungsformen beschrieben, die in der beigefügten Zeichnung dargestellt sind. In dieser zeigen:
Figur 1 schematisch einen erfindungsgemäßen Linearantrieb mit einem Gurtstraffer und einem Gurtaufroller;
Figur 2 schematisch einen Schnitt durch einen erfindungsgemäßen Linearantrieb gemäß einer ersten Ausführungsform in der Ausgangsstellung; und
Figur 3 schematisch einen Schnitt durch den Linearantrieb von Figur 2 nach erfolgtem Straffhub.

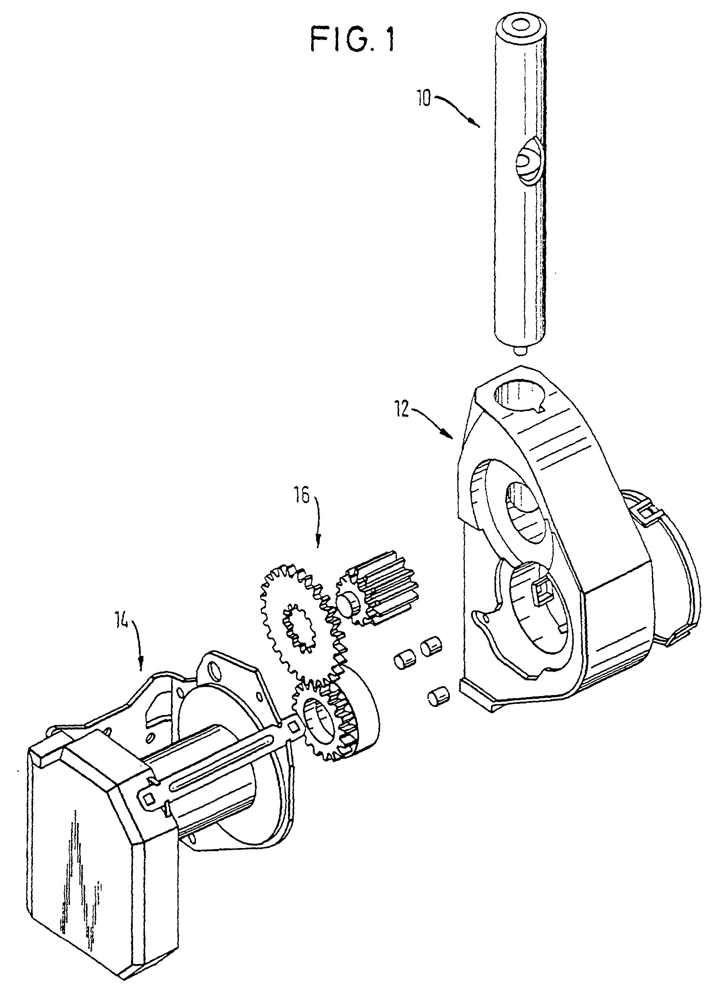

In Figur 1 sind in einer Explosionsansicht ein erfindungsgemäßer Linearantrieb 10 sowie ein zugehöriger Gurtstraffer 12 und ein Gurtaufroller 14 dargestellt, an welchem der Gurtstraffer 12 mittels eines Übersetzungsgetriebes 16 angreift.

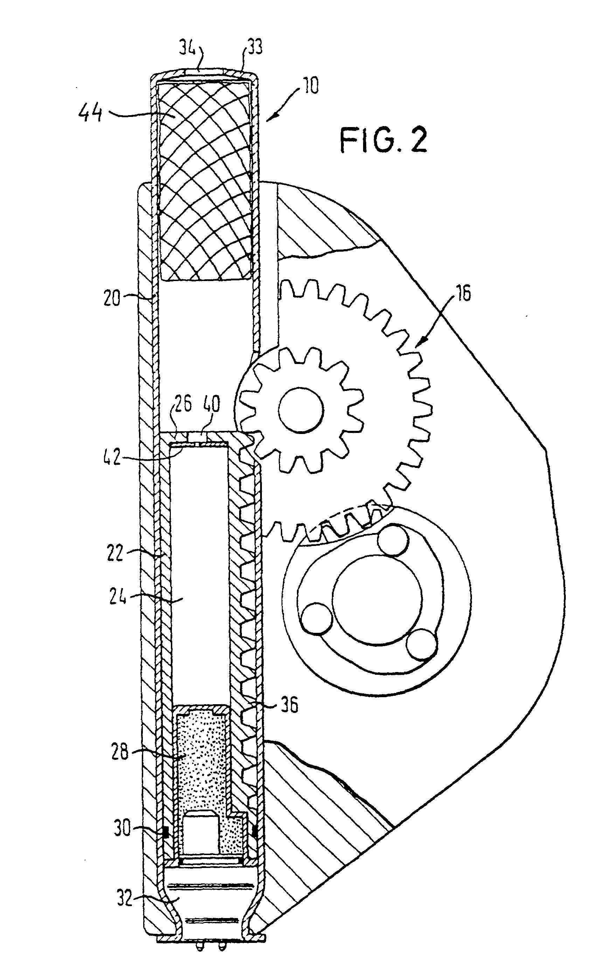

Wie in Figur 2 zu sehen ist, besteht der Linearantrieb 10 aus einem Zylinderrohr 20 und einem in diesem verschiebbar angeordneten Kolben 22. Der Kolben 22 weist einen hohlen Innenraum 24 auf, der an einem axialen Ende eine Stirnwand 26 und an dem entgegengesetzten axialen Ende eine pyrotechnische Treibladung 28 aufweist. Zwischen dem Zylinderrohr 20 und dem Kolben 22 ist an diesem ein Dichtring 30 angeordnet. An seinem bezüglich Figur 2 unteren Ende ist das Zylinderrohr 22 durch einen Verschlußstopfen 32 verschlossen, der auch die Zündkontakte für eine Zündung der Treibladung 28 trägt. An seinem entgegengesetzten Ende ist das Zylinderrohr 20 mit einer Kolbenfangsicherung 33 mit Öffnung 34 versehen. Die Öffnung 34 dient für eine Entlüftung des Zylinderrohres 20 bei einem Straffhub des Kolbens 22.

Der Kolben 22 weist auf seiner Mantelfläche eine sich parallel zur Längsachse des Kolbens 22 erstreckende Verzahnung 36 auf, die mit einem Zahnrad des Getriebes 16 zusammenwirken kann, um einen Straffhub des Kolbens 22 in eine Rotationsbewegung umzusetzen, welche als eine Drehung in der Gurtbandaufwickelrichtung auf die Gurtspule des Gurtaufrollers 14 übertragen wird. Ein solcher Straffhub wird ausgelöst, indem die Treibladung 28 gezündet wird. Diese erzeugt ein unter Druck stehendes Gas, welches den Innenraum des Kolbens beaufschlagt und zu einer Verlagerung des Kolbens 22 im Zylinderrohr 20 führt.

Ein aus einem Drahtgemenge bestehendes Kissen 44 ist in das Zylinderrohr 20 nahe der Stirnwand 33 eingesetzt, so daß es die Öffnung 34 abdeckt. Das Kissen 44 hat eine erhebliche axiale Länge von etwa 40 mm. Das Kissen 44 ist aus einer äußeren Hülle, die aus einem feinen Drahtgeflecht besteht, und einer Füllung zusammengesetzt. Die Füllung besteht vorzugsweise ihrerseits aus einer aufgerollten Schlauchstruktur aus einem Drahtgeflecht. Die Drahtstärke der Hülle ist feiner als die der Füllung. Die axialen Enden der Hülle sind durch Verdrehen geschlossen, so daß die Füllung nicht herausfallen kann. Der Außendurchmesser des Kissens 44 ist vor dem Einsetzen in das Zylinderrohr 20 etwas größer als dessen Innendurchmesser, so daß es mit radialer Stauchung eingeschoben werden kann.

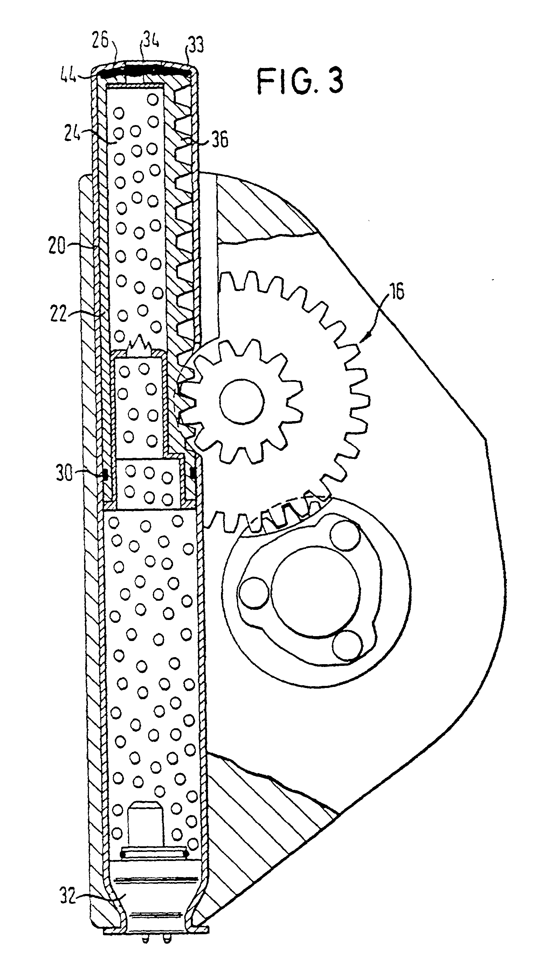

Wie aus Figur 3 ersichtlich ist, wird das Kissen 44, wenn der Kolben 22 am Ende seines Hubes angelangt ist, vollständig zusammengeschoben und bildet so nur noch eine relativ dünne Scheibe. Das Kissen 44 bedämpft den Aufprall des Kolbens 22 an der Stirnwand 33 des Zylinderrohres. Ferner verhindert es sicher das Austreten von Bruchstücken, die beispielsweise beim Aufreißen der Berstscheibe 42 entstehen. Auch wird das Austreten einer Flamme aus der Öffnung 34 sicher verhindert. Schließlich werden auch die heißen Gase, die beim Abbrand der Treibladung freiwerden, durch das Kissen 44 gekühlt.

## Patentansprüche

1. Linearantrieb (10) für einen Gurtstraffer, mit einem Zylinderrohr (20), das an einem axialen Ende eine mit einer Öffnung (34) versehene Stirnwand (33) aufweist,
einem in diesem verschiebbar angeordneten Kolben (22), der einen hohlen Innenraum (24) aufweist,
und einer pyrotechnischen Treibladung (28), die nach ihrer Zündung den Innenraum (24) des Kolbens (22) mit unter Druck stehendem Gas beaufschlagt,
**dadurch gekennzeichnet, daß** innenseitig von der Stirnwand (33) des Zylinderrohres (20) ein Kissen (44) aus einem Drahtgemenge angeordnet ist.

2. Linearantrieb nach Anspruch 1, **dadurch gekennzeichnet, daß** der Kolben (22) an seinem der Stirnwand des Zylinders zugewandten axialen Ende eine Stirnwand (26) mit einer Durchgangsöffnung (40) aufweist, die auf der Seite des Innenraumes (24) durch eine Berstscheibe (42) abgedeckt ist.

3. Linearantrieb nach Anspruch 1 oder 2, **dadurch gekennzeichnet, daß** das Kissen (44) eine schlauchförmige Hülle und eine Füllung aufweist.

4. Linearantrieb nach Anspruch 3, **dadurch gekennzeichnet, daß** die schlauchförmige Hülle aus einem Drahtgeflecht gebildet ist.

5. Linearantrieb nach Anspruch 4, **dadurch gekennzeichnet, daß** die Hülle an ihren beiden axialen Enden durch Verdrehen verschlossen ist.

6. Linearantrieb nach einem der Ansprüche 3 bis 5, **dadurch gekennzeichnet, daß** die Füllung durch eine aufgerollte Schlauchstruktur aus einem Drahtgeflecht gebildet ist.

7. Linearantrieb nach einem der Ansprüche 3 bis 5, **dadurch gekennzeichnet, daß** die Füllung aus Stahlwolle besteht.

8. Linearantrieb nach einem der Ansprüche 3 bis 5, **dadurch gekennzeichnet, daß** die Drahtstärke der Hülle feiner ist als die der Füllung.

9. Linearantrieb nach einem der vorstehenden Ansprüche, **dadurch gekennzeichnet, daß** das Kissen (44) eine axiale Länge von etwa 40 mm aufweist.

10. Linearantrieb nach einem der vorstehenden Ansprüche, **dadurch gekennzeichnet, daß** das Kissen (44) mit radialer Stauchung in das Zylinderrohr (20) eingeschoben ist.

## Claims

1. A linear drive (10) for a belt tensioner, comprising a cylinder tube (20) having at one axial end a front wall (33) provided with an opening (34),
a piston (22) shiftably arranged in the cylinder tube (20) and comprising a hollow inner space (24),
and a pyrotechnical propellant charge (28) which following its ignition acts upon the inner space (24) of the piston (22) with compressed gas,
**characterized in that** a pad (44) of a wire conglomerate is arranged on the inner side of the front wall (33) of the cylinder tube (20).

2. The linear drive as set forth in claim 1, **characterized in that** the piston (22) comprises at its axial end facing the front wall of the cylinder a front wall (26) having a passage opening (40) covered by a bursting disc (42) on the side of the inner space (24).

3. The linear drive as set forth in claim 1 or 2, **characterized in that** the pad (44) comprises a hose-like sheathing and a filling.

4. The linear drive as set forth in claim 3, **characterized in that** the hose-like sheathing is formed of a wire mesh.

5. The linear drive as set forth in claim 4, **characterized in that** the sheathing is closed at both its axial ends by twisting.

6. The linear drive as set forth in any of the claims 3 to 5, **characterized in that** the filling is formed by a rolled-up hose structure of a wire mesh.

7. The linear drive as set forth in any of the claims 3 to 5, **characterized in that** the filling consists of steel wool.

8. The linear drive as set forth in any of the claims 3 to 5, **characterized in that** the wire gauge of the sheathing is finer than that of the filling.

9. The linear drive as set forth in any of the preceding claims, **characterized in that** the pad (44) has an axial length of approximately 40 mm.

10. The linear drive as set forth in any of the preceding claims, **characterized in that** the pad (44) is inserted into the cylinder tube (20) with radial compression.

## Revendications

1. Entraînement linéaire (10) pour un tendeur de ceinture, comportant un tube cylindrique (20) qui présente à une extrémité axiale une paroi frontale (33) pourvue d'une ouverture (34),
un piston (22) agencé à déplacement dans celui-ci et qui présente un espace intérieur (24) creux,
et une charge propulsive (28) pyrotechnique qui, après son allumage, sollicite l'espace intérieur (24) du piston (22) avec du gaz sous pression,
**caractérisé en ce qu'**un coussin (44) de conglomérat de fils métalliques est agencé intérieurement par rapport à la paroi frontale (33) du tube cylindrique (20).

2. Entraînement linéaire selon la revendication 1, **caractérisé en ce que** le piston (22) présente à son extrémité axiale tournée vers la paroi frontale du cylindre une paroi frontale (26) avec une ouverture de passage (40) qui est recouverte par une plaque de rupture (42) sur le côté de l'espace intérieur (24).

3. Entraînement linéaire selon la revendication 1 ou 2, **caractérisé en ce que** le coussin (44) présente une enveloppe en forme de boyau et un remplissage,

4. Entraînement linéaire selon la revendication 3, **caractérisé en ce que** l'enveloppe en forme de boyau est formée par un treillis de fil métallique.

5. Entraînement linéaire selon la revendication 4, **caractérisé en ce que** l'enveloppe est fermée par torsion à ses deux extrémités axiales.

6. Entraînement linéaire selon l'une des revendications 3 à 5, **caractérisé en ce que** le remplissage est formé par une structure enroulée en forme de boyau, d'un treillis de fil métallique.

7. Entraînement linéaire selon l'une des revendications 3 à 5, **caractérisé en ce que** le remplissage est en laine d'acier.

8. Entraînement linéaire selon l'une des revendications 3 à 5, **caractérisé en ce que** l'épaisseur de fil métallique de l'enveloppe est plus fine que celle du remplissage.

9. Entraînement linéaire selon l'une des revendications précédentes, **caractérisé en ce que** le coussin (44) présente une longueur axiale d'approximativement 40 mm.

10. Entraînement linéaire selon l'une des revendications précédentes, **caractérisé en ce que** le coussin (44) est introduit dans le tube cylindrique (20) avec déformation sous pression radiale.
